# FASCICULE DE BREVET EUROPEEN

(11) **EP 0 929 269 B1**
(45) Date de publication et mention de la délivrance du brevet: **25.06.2003**
(21) Numéro de dépôt: 97919097.2
(22) Date de dépôt: 15.09.1997
(51) Int. Cl.: A61C 13/30, A61C 5/04

(54) **INSERT ENDODONTIQUE D'OBTURATION CANALAIRE DENTAIRE PREIMPREGNE A RENFORT DE FIBRES**
ENDODONTISCHES MIT FASERVERSTÄRKUNG VORIMPRÄGNIERTES INSERT ZUM FÜLLEN EINES ZAHNWURZELKANALS
ENDODONTIC INSERT PRE-IMPREGNATED WITH REINFORCING FIBRES FOR FILLING THE DENTAL CANAL

(30) Priorité: 17.09.1996 FR 9611524
(43) Date de publication de la demande: 21.07.1999
(73) Titulaire: Billet, Gilles, F-38500 Voiron (FR); Clunet-Coste, Bruno, F-38960 Saint-Etienne-de-Crossey (FR); Collombin, André, 38500 Voiron (FR); Maneuf, Bernard, 38500 Voiron (FR); Nordvall, Leif Siguard, 311 04 Glommen (SE)
(72) Inventeur: Billet, Gilles, F-38500 Voiron (FR); Clunet-Coste, Bruno, F-38960 Saint-Etienne-de-Crossey (FR); Collombin, André, 38500 Voiron (FR); Maneuf, Bernard, 38500 Voiron (FR); Nordvall, Leif Siguard, 311 04 Glommen (SE)
(74) Mandataire: Hecké, Gérard
(86) Numéro de dépôt international: FR9701622
(87) Numéro de publication internationale: WO98011842

(56) Documents cités:
- WO-A-96/15731
- US-A- 4 425 094

## Description

### DOMAINE TECHNIQUE DE L'INVENTION

L'invention concerne un insert d' obturation canalaire dentaire comprenant des moyens de comblement anatomique et physiologique du canal radiculaire.

### ETAT DE LA TECHNIQUE

En dentisterie, et notamment en endodontie, les canaux radiculaires doivent être obturés hermétiquement .Dans l'art antérieur, on fait généralement usage de certains matériaux spécifiques, tels que la gutta-percha, ou bien des pâtes à l'oxyde de zinc / eugénol, ou encore par exemple à des résines Bakélites sous forme de préparations bi-composant, qui sont envoyées dans le canal par des moyens mécaniques.

Ces matériaux connus doivent être retirés partiellement lorsque la partie coronaire de la dent doit être reconstruite. Un tenon est généralement introduit et scellé dans le canal radiculaire après mise en forme pour servir d'ancrage à une reconstitution coronaire .La phase de reconstitution coronaire est effectuée lors d'une séance différente de celle de l'obturation canalaire.

Selon le document CH-A-562605, les tenons peuvent être en matériau métallique, et sont pourvus chacun d'un filetage destiné à visser la base du tenon dans le canal radiculaire.

Des tenons en matériau composite préfabriqué, éventuellement renforcé par des fibres, sont décrits dans les documents US-A-4936776, DE-A-3825601, et EP-A-0432001. Chaque tenon présente une forme finie rectiligne et une structure rigide, avant leur introduction dans le canal.. Ils ne peuvent donc en aucun cas épouser l'éventuelle courbure d'une racine, et le praticien doit alors élargir le canal pour permettre la mise en place du tenon. Le travail d'élargissement du canal est susceptible de diminuer la solidité de la racine, avec des risques non négligeables de perforation.

Dans toutes ces techniques connues, le tenon d' ancrage est généralement constitué d'un matériau différent de celui de l'obturation canalaire, et l'interface de liaison entre le tenon et le matériau de l'obturation canalaire constitue une zone fragilisée soumise à des contraintes mécaniques importantes au cours de la mastication.

### OBJET DE L'INVENTION

Un premier objet de l'invention consiste à réaliser un insert d'obturation canalaire de grande résistance mécanique, et pouvant être facilement inséré dans le canal radiculaire.

Un deuxième objet de l'invention concerne un procédé permettant en une seule et même opération, l'obturation canalaire et la construction d'un ancrage radiculaire anatomique et physiologique.

L'insert endodontique selon l'invention est caractérisé en ce que les moyens de comblement comportent une âme déformable ou élastique en matériau composite en l'état polymérisé, enveloppée d'un ou de plusieurs manchons en matériau composite préimprégné de résine, et se trouvant dans un premier état pâteux d'avant polymérisation de manière à rendre le matériau de l'insert flexible et maléable avant et pendant l'introduction de l'insert dans le canal radiculaire, ledit matériau étant ensuite polymérisable à la demande par des moyens de réticulation pour passer dans un deuxième état polymérisé après l'introduction de l'insert dans ledit canal.

Selon un mode de réalisation préférentiel, l'âme en matériau composite comporte une matrice organique à renfort de fibres et/ou de particules organiques ou minérales, ou les deux à la fois. L'organisation des fibres de renfort de l'âme peut être unidirectionnelle, pluri directionnelle, ou aléatoire.

Selon une caractéristique de l'invention, l'âme est creuse et comporte un conduit interne pour l'injection dans le canal d'un agent de scellement à base de colle. La paroi de l'âme est avantageusement poreuse pour permettre le passage de la colle, introduite sous pression contrôlée à travers le conduit.

Selon une autre caractéristique de l'invention, la pâte constituant le ou les manchons comporte une matrice organique à renfort de fibres ou de particules organiques ou minérales, de même nature et structure que celles de l'âme.

Le manchon externe est constitué d'une gaine en matériau composite de même type que le ou les manchons internes, ladite gaine étant déformable et servant de contenant à l' ensemble des matériaux de l'âme, et des manchons.

La structure des fibres de la gaine externe est agencée pour autoriser le passage de la résine en excès par extrudation au fur et à mesure de l'insertion de l'insert dans le canal. La résine en excès se mélange à la colle de l'agent de scellement pour sceller les canalicules dentinaires de la racine.

La partie supérieure de l'insert qui émerge du canal radiculaire, peut servir avantageusement de tuteur ou tenon à une reconstitution coronaire. De ce fait, le même matériau est utilisé pour obturer le canal radiculaire et renforcer les structures résiduelles de la dent. L'obturation canalaire et le tenon d'ancrage sont un seul et même matériau.

L'insert se présente sous un produit manufacturé conservé à l'abri des radiations électromagnétiques en sachet étanche, et à une température inférieure à 37°C.

Après la mise en place de l'insert dans la canal, la polymérisation par l'action des moyens de réticulation peut être déclenchée, par rayonnement électromagnétique, et/ou par éclairage lumineux, et/ou par effet thermique. La polymérisation en masse de l'insert et de la colle de l'agent de scellement est effectué simultanémént ce qui renforce la tenue mécanique de l'ensemble.

### DESCRIPTION DES FIGURES

D'autres avantages et caractéristiques de l'invention ressortiront plus clairement de la description qui va suivre d'un mode de réalisation donné à titre d'exemple non limitatif, et représenté aux dessins annexés, dans lesquels:
- la figure 1 montre une vue schématique en coupe verticale d'une reconstitution coronaire de dent, et d'une racine équipée d'un tenon selon l'art antérieur;
- la figure 2 est une vue identique de la figure 1, avec un insert endodontique d'obturation canalaire selon l'invention;
- la figure 3 représente une vue schématique à échelle agrandie de l'insert de la figure 2.

### DESCRIPTION D'UN MODE DE REALISATION PREFERENTIEL

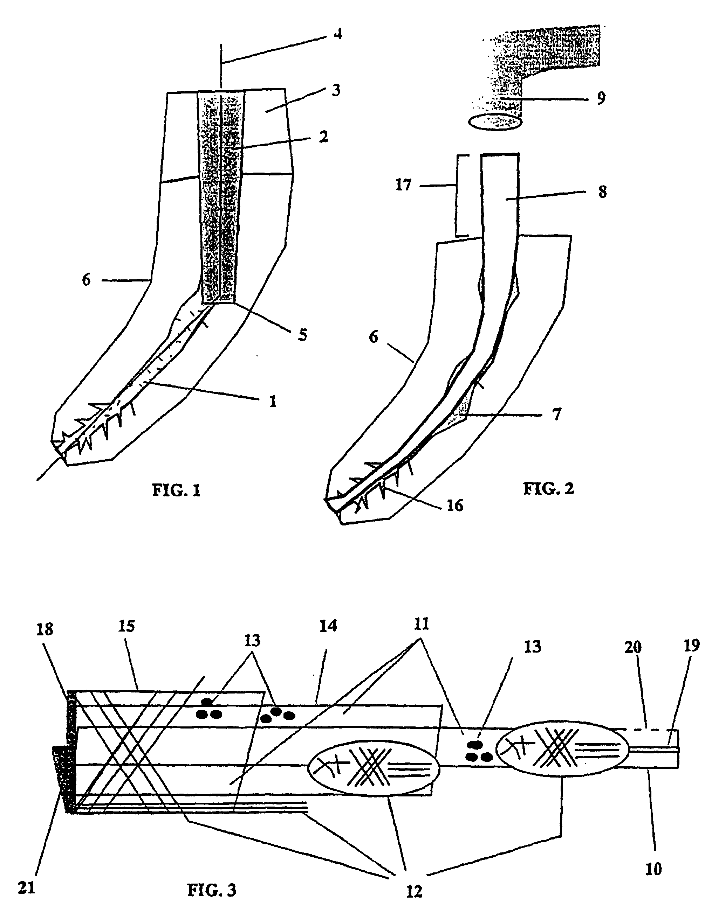

En référence à la figure 1, la partie inférieure du canal radiculaire 1 de la racine 6 est rempli par un matériau de comblement, et la partie supérieure doit être élargie et mise en forme pour permettre la mise en place d'un tenon 2 servant d'ancrage à la reconstitution coronaire 3. Les matériaux constitutifs du tenon 2 et du matériau de comblement sont différents. L'interface de liaison du tenon 2 et du matériau de comblement peut présenter une zone fragilisée 5, notamment en cas de perforation du canal.

Sur les figures 2 et 3, la mise en oeuvre de l'insert selon l'invention s'effectue de la manière suivante:
Le canal dentaire 1 est d'abord mis en forme, et soumis à un nettoyage, et à une désinfection. Les parois du canal 1 sont traitées par une attaque acide, puis rincées et séchées, selon les protocoles habituels de collage en dentisterie adhésive.

Un agent de scellement à base de colle 7 hydrophile photo polymérisable est introduit dans le canal. Le matériau de comblement 8 de l'insert est inséré dans le canal 1, et en épouse les courbures et circonvolutions par déformation plastique.

L 'ensemble colle 7 et matériau de comblement 8 est alors polymérisé au moyen par exemple d'une lampe à photo polymériser 9 , scellant le canal 1 et les canalicules 16.

Le matériau 8 de l'insert comporte une âme 10 semi - rigide et élastique en matériau composite en l'état polymérisé, constitué d'une matrice organique 11 et de renforts de fibres 12 organiques ou minérales ou organo minérales, ou encore de particules 13, formées à titre d'exemples par de la silice pyrolitique, du verre, de la céramique, des verres borosilicates, ou de céramique, du verre de baryum-aluminium, strontium aluminium. D'autres particules 13 peuvent être utilisées, notamment des particules de métaux lourds radio-opaques tels que nobium, étain, titane, ainsi que des pigments organiques ou minéraux.

L'organisation des fibres peut être uni axiale ou multi axiale ou bien encore il peut s'agir de tissus de fibres.

Les fibres 12 peuvent être des fibres longues ou des micro-fibrilles indifféremment. Il peut aussi s'agir d'une seule fibre.

L'âme 10 peut être avantageusement creuse, et servir de canal 19 interne pour l'injection de la colle de l'agent de scellement 7. La paroi de l'âme 10 peut aussi avoir une structure poreuse 20 pour laisser s'exsuder la colle 7 injectée par le canal interne 19.

Les fibres 12 de l'âme 10 peuvent être choisies parmi n'importe quelle sorte de fibre, notamment fibres de verre, aramide, polyester , bore, autorisant le passage des rayonnements électromagnétiques. Elles doivent en particulier être perméables au rayonnement lumineux pour servir de guide de lumière.

Toutes ces charges sont traitées avant leur incorporation dans la matrice organique grâce à des composés organo - silanes tels que les aryloxy - silanes et/ou halogéno - silanes, sans limitation.

La matrice organique est choisie dans le groupe constitué par les résines aromatiques à base dyméthacrylate, polyméthacrylates, méthacrylates, méthacrylate-uréthanes, polyacétates, polycarbonates, des résines aromatiques à base époxy, ou des résines polyesters.

L'âme 10 sert de tuteur au matériau, et est enrobée d'un ou plusieurs manchons 14 en matériau composite préimprégné se trouvant dans un état pâteux d'avant polymérisation, et dont la polymérisation peut être déclenchée par rayonnement électromagnétique.

Le premier manchon 14 est constitué d'une pâte en matériau composite en l'état d'avant polymérisation,. et comprenant une matrice organique identique à celle de l'âme 10 et des renforts 12, 13 de mêmes natures. La matrice organique du / des manchons 14 renferme des composants photoamorceurs tels que des dicétones, notamment le diacétyle et/ou des quinones tels que le camphoroquinone et l' acénaphène quinone sensibles à la lumière visible, ainsi que des accelérateurs, notamment des amines. Ainsi la matrice organique peut être réticulée par éclairage par de la lumière visible.

Une autre solution consiste en ce que les parties en l'état non polymérisé du matériau composite des manchons 14, ainsi que la colle 7 sont conservées à une température inférieure à 37°C, et polymérisent par effet thermique, seuls ou combinés avec le rayonnement électro-magnétique, lorsque le matériau atteint la température du corps humain.

Les manchons 14 sont maintenus en forme par une gaine 15, elle-même en matériau composite en l'état d'avant polymérisation. La gaine 15 est constituée de la même matrice 11 organique que les manchons, et des mêmes renforts 12, 13 .Cependant les fibres 12 de renfort de la gaine 15 sont organisées en tissus de fibres formant une géométrie spatiale du matériau . L'organisation des fibres peut être aussi unidirectionnelle et même parallèle à l'axe de l'insert.

La gaine 15 sert de contenant au matériau de l'insert, et est déformable par simple pression. Elle peut laisser passer au travers de ses mailles un excès de résine lors de l'introduction de l'insert dans le canal 1. La gaine 15 permet à l'ensemble du matériau de transmettre les rayonnements, et en particulier le rayonnement lumineux, nécessaire à la photopolymérisation des résines de collage. La gaine 15 est un élément essentiel de diffusion des rayonnements électromagnétiques, et permet un éclairement égal de l'intérieur du canal dentaire 1 en cas d' insolation lumineuse .

L'ensemble constitué par l'âme centrale 10, les manchons intermédiaires 14, et la gaine exteme 15 peut être soudé ou / et scellé à une extrémité 18 de l'insert pour que le matériau ne se délite pas lors de son insertion dans le canal radiculaire 1. L'extrémité 18 peut être avantageusement arrondie 21 pour éviter toute butée ou coincement lors de l'introduction dans le canal radiculaire 1.

Un des points essentiels de l'invention est que l'ensemble du matériau de l'insert reste flexible et maléable tant que la réticulation n'a pas été volontairement provoquée. L'insert peut donc épouser toutes les courbures du canal radiculaire 1.

Un deuxième point important est que le volume de matériau entourant l'âme centrale 10 peut se conformer au volume du canal dentaire, par déformation simple, et par l'expulsion d'une partie de la résine au fur et à mesure de l'insertion de l'insert dans le canal 1.

Un troisième point important est que lorsque la réticulation de la matrice organique est déclenchée, l'ensemble du matériau de l'insert va polymériser simultanément.

De plus, la résine de l'agent de scellement (7) préalablement ou simultanément introduite dans le canal dentaire 1 avant l'introduction de l'insert, va aussi polymériser, scellant les canalicules dentinaires accessoires (16) grâce notamment à la diffusion de la lumière effectuée par la gaine 15, les manchons 14, et l'âme 10 de l'insert.

Un quatrième point est que, lorsque le praticien a pris soin de laisser dépasser l'insert hors de la racine dentaire 6, la partie émergente 17 de l'insert va servir de pilier de renforcement pour la reconstruction de la dent 3 par des techniques conventionnelles. L'insert d' obturation canalaire objet de l'invention joue aussi le rôle de tenon de reconstitution.

Le procédé selon l'invention de comblement anatomique et physiologique à base d'un article manufacturé réalise en une seule opération, le comblement des canaux radiculaires 16 et la réalisation d'un ancrage radiculaire de renforcement.

Les caractéristiques mécaniques de l'insert après réticulation sont identiques à celles décrites dans le document WO 96/15731. L' insert de comblement possède donc aussi un comportement mécanique similaire à la dentine radiculaire.

Cependant, le fait d' épouser les courbes et circonvolutions du canal 1 découlant de sa structure assure un ancrage mécanique radiculaire supplémentaire, et en interdit la désinsertion par traction ou rotation.

## Revendications

1. Insert d' obturation canalaire dentaire comprenant des moyens de comblement anatomique et physiologique du canal radiculaire,
**caractérisé en ce que** les moyens de comblement comportent une âme (10) déformable ou élastique en matériau composite en l'état polymérisé, enveloppée d'un ou de plusieurs manchons (14, 15) en matériau composite préimprégné de résine, se trouvant dans un premier état pâteux d'avant polymérisation de manière à rendre l'insert flexible et maléable avant et pendant son introduction dans le canal radiculaire (1), ledit matériau étant ensuite polymérisable à la demande par des moyens de réticulation pour passer dans un deuxième état polymérisé après l'introduction de l'insert dans ledit canal.

2. Insert d' obturation canalaire selon la revendication 1, **caractérisé en ce que** l'âme (10) en matériau composite comporte une matrice organique à renfort de fibres (12) et/ou de particules (13) organiques ou minérales.

3. Insert d' obturation canalaire selon la revendication 2, **caractérisé en ce que** l'organisation des fibres (12) de l'âme (10) est unidirectionnelle, pluridirectionnelle, ou aléatoire ou bien les trois à la fois.

4. Insert d' obturation canalaire selon les revendications 1 ou 2, **caractérisé en ce que** l' âme (10) est agencé en un conduit de lumière, autorisant le passage d'un rayonnement électromagnétique ou lumineux.

5. Insert d' obturation canalaire selon la revendication 1 ou 2, **caractérisé en ce que** l'âme (10) peut être constituée d'un seul filament.

6. Insert d' obturation canalaire selon la revendication 1 ou 2, **caractérisé en ce que** l'âme (10) est creuse (19) et comporte un conduit (19) interne pour l'injection d'un agent de scellement (7) à base de colle.

7. Insert d' obturation canalaire selon la revendications 6, **caractérisé en ce que** la paroi de l'âme (10) est poreuse (20) pour permettre le passage de la colle (7), introduite sous pression contrôlée à travers le conduit (19).

8. Insert d' obturation canalaire selon la revendication 1 ou 2, **caractérisé en ce que** la pâte constituant le ou les manchons (14) comporte une matrice organique à renfort de fibres (12), ou de particules (13) organiques ou minérales, de mêmes nature et structure que celles de l'âme (10).

9. Insert d' obturation canalaire selon la revendication 8, **caractérisé en ce que** le manchon externe (15) est constitué d'une gaine en matériau composite de même type que le ou les manchons (14) internes, ladite gaine étant déformable et servant de contenant à l' ensemble des matériaux de l'âme (10), et des manchons (14).

10. Insert d' obturation canalaire selon la revendication 2 ou 8, **caractérisé en ce que** les fibres (12) de l'âme (10) et des manchons (14) sont organisées selon des orientations unidirectionnelles, et que le volume des manchons (14) et de la gaine externe (15) est modifiable par simple pression.

11. Insert d' obturation canalaire selon la revendication 9 ou 10, **caractérisé en ce que** la gaine externe tissée (15) est un canal de lumière autorisant le passage d'un rayonnement lumineux.

12. Insert d' obturation canalaire selon la revendication 9, **caractérisé en ce que** l'ensemble des constituants de l'insert peut être soudé ou scellé à une extrémité (18), de telle manière que le matériau ne se délite pas lors de son insertion dans le canal radiculaire.

13. Insert d'obturation canalaire selon la revendication 12, **caractérisé en ce que** la partie terminale soudée de l'insert (18) peut être arrondie (21) pour faciliter ladite insertion , indépendamment de la courbure ou de la forme du canal radiculaire (1).

14. Insert d' obturation canalaire selon la revendication 9, **caractérisé en ce que** la structure des fibres de la gaine externe (15) est agencée pour autoriser le passage de la résine en excès par extrudation au fur et à mesure de la pénétration de l'insert dans le canal (1), et que l'extrudation de ladite résine en excès se mélange à la colle de l'agent de scellement (7) pour sceller les canalicules dentinaires (16) de la racine (6).

15. Insert d' obturation canalaire selon l'une des revendications 1 à 14, **caractérisé en ce que** la partie émergente (17) prolongée de l'insert peut servir de tuteur ou tenon à une reconstitution coronaire (3).

16. Insert d' obturation canalaire selon l'une des revendications 1 à 15 **caractérisé en ce que** l'insert est un produit manufacturé conservé à l'abri des radiations électromagnétiques en sachet étanche, et à une température inférieure à 37°C.

17. Insert d' obturation canalaire selon l'une quelconque des revendications 1 à 16, **caractérisé en ce que** la polymérisation par l'action des moyens de réticulation peut être déclenchée, soit par rayonnement électromagnétique. soit par éclairage lumineux, soit par effet thermique.

18. Insert d' obturation canalaire selon la revendication 17, **caractérisé en ce que** la polymérisation en masse de l'insert (8) et de la colle de l'agent de scellement (7) est effectué simultanémént.

## Patentansprüche

1. Zahnwurzelkanalfüllung, die Mittel zum anatomischen und physiologischen Füllen des Wurzelkanals umfasst,
**dadurch gekennzeichnet, dass** die Mittel zum Füllen einen verformbaren oder elastischen Kern (10) aus Verbundmaterial in polymerisiertem Zustand umfassen, der von einer oder mehreren Hülsen (14, 15) aus mit Harz vorimprägniertem Verbundmaterial ummantelt ist, das sich in einem ersten, zähflüssigen Vorpolymerisations-Zustand befindet, um die Füllung vor ihrem und während ihres Einbringen(s) in den Wurzelkanal (1) geschmeidig und formbar zu machen, wobei das Material anschließend nach Wunsch mit Hilfe von Vernetzungsmitteln polymerisierbar ist, um nach dem Einbringen der Füllung in den Wurzelkanal in einen zweiten, polymerisierten Zustand überzugehen.

2. Zahnwurzelkanalfüllung nach Anspruch 1, **dadurch gekennzeichnet, dass** der Kern (10) aus Verbundmaterial eine organische Matrix mit einer Verstärkung aus organischen oder mineralischen Fasern (12) und/oder Partikeln (13) umfasst.

3. Zahnwurzelkanalfüllung nach Anspruch 2, **dadurch gekennzeichnet, dass** die Orientierung der Fasern (12) des Kerns (10) unidirektional, multidirektional oder beliebig ist oder auch alle drei Orientierungen auf einmal umfasst.

4. Zahnwurzelkanalfüllung nach den Ansprüchen 1 oder 2, **dadurch gekennzeichnet, dass** der Kern (10) in einem Lichtkanal angeordnet ist, der elektromagnetische oder Lichtstrahlen durchlässt.

5. Zahnwurzelkanalfüllung nach Anspruch 1 oder 2, **dadurch gekennzeichnet, dass** der Kern (10) aus einem einzigen Faden bestehen kann.

6. Zahnwurzelkanalfüllung nach Anspruch 1 oder 2, **dadurch gekennzeichnet, dass** der Kern (10) hohl (19) ist und einen Innenkanal (19) für das Einspritzen eines Versiegelungsmittels (7) auf Basis von Klebstoff umfasst.

7. Zahnwurzelkanalfüllung nach Anspruch 6, **dadurch gekennzeichnet, dass** die Wand des Kerns (10) porös (20) ist, um den Klebstoff (7) hindurchzulassen, der unter kontrolliertem Druck durch den Kanal (19) eingespritzt wird.

8. Zahnwurzelkanalfüllung nach Anspruch 1 oder 2, **dadurch gekennzeichnet, dass** die Paste, welche die Hülse(n) (14) bildet, eine organische Matrix mit einer Verstärkung aus organischen oder mineralischen Fasern (12) und/oder Partikeln (13) gleicher Art wie denjenigen des Kerns (10) umfasst.

9. Zahnwurzelkanalfüllung nach Anspruch 8, **dadurch gekennzeichnet, dass** die äußere Hülse (15) aus einer Hülle aus Verbundmaterial der gleichen Art wie dem der inneren Hülsen (14) besteht, welche Hülle verformbar ist und als Behälter für sowohl das Material des Kerns (10) als auch das der Hülsen (14) dient.

10. Zahnwurzelkanalfüllung nach Anspruch 2 oder 8, **dadurch gekennzeichnet, dass** die Fasern (12) des Kerns (10) und der Hülsen (14) eine unidirektionale Ausrichtung haben und dass das Volumen der Hülsen (14) und der äußeren Hülle (15) durch einfachen Druck veränderbar ist.

11. Zahnwurzelkanalfüllung nach Anspruch 9 oder 10, **dadurch gekennzeichnet, dass** die äußere, gewebte Hülle (15) ein Lichtkanal ist, der die Durchdringung von Lichtstrahlen erlaubt.

12. Zahnwurzelkanalfüllung nach Anspruch 9, **dadurch gekennzeichnet, dass** alle Bestandteile der Füllung an einem Ende (18) verschweißt oder versiegelt werden können, damit das Material bei seinem Einbringen in den Wurzelkanal nicht rissig wird.

13. Zahnwurzelkanalfüllung nach Anspruch 12, **dadurch gekennzeichnet, dass** das verschweißte Ende (18) der Füllung abgerundet (21) werden kann, um unabhängig von der Krümmung oder Form des Wurzelkanals (1) das Einbringen zu erleichtern.

14. Zahnwurzelkanalfüllung nach Anspruch 9, **dadurch gekennzeichnet, dass** die Struktur der Fasern der äußeren Hülle (15) so vorgesehen ist, dass sie das überschüssige Harz durch Durchdrücken im gleichen Maße hindurchdringen lässt, wie die Füllung in den Kanal (1) eingedrungen ist, und dass das Durchdrücken des überschüssigen Harzes sich mit dem Klebstoff des Zementierungsmittels (7) vermengt, um die kleinen Zahnkanäle (16) der Wurzel (6) zu versiegeln.

15. Zahnwurzelkanalfüllung nach einem der Ansprüche 1 bis 14, **dadurch gekennzeichnet, dass** der herausstehende, verlängerte Teil (17) der Füllung als Stütze oder Stift für einen Wiederaufbau des Zahns mittels einer Krone (3) dienen kann.

16. Zahnwurzelkanalfüllung nach einem der Ansprüche 1 bis 15, **dadurch gekennzeichnet, dass** die Füllung ein fabrikmäßig hergestelltes Produkt ist, das vor elektromagnetischer Strahlung in einem dichten Beutel geschützt und auf einer Temperatur unter 37°C gelagert wird.

17. Zahnwurzelkanalfüllung nach einem der Ansprüche 1 bis 16, **dadurch gekennzeichnet, dass** die Polymerisierung durch die Wirkung der Vernetzungsmittel entweder durch elektromagnetische Strahlung, durch Lichtbestrahlung oder Wärmewirkung ausgelöst werden kann.

18. Zahnwurzelkanalfüllung nach Anspruch 17, **dadurch gekennzeichnet, dass** die Massepolymerisation der Füllung (8) und des Klebstoffs des Versiegelungsmittels (7) gleichzeitig erfolgt.

## Claims

1. An insert for filling the dental canal comprising means for anatomically and physiologically filling up the root canal,
**characterized in that** the filling means comprise a ductile or malleable core (10) made of a composite material in polymerised state, sheathed in one or more sleeves (14, 15) made of a composite material pre-impregnated with resin, and being in a first pasty state prior to polymerisation so as to make the insert ductile and malleable before and during its introduction into the root canal (1), said material then being able to be polymerised as required by cross-linking means to change to a second polymerised state after the insert has been inserted in said canal.

2. The insert for filling the dental canal according to claim 1, **characterized in that** the core (10) made of composite material comprises an organic matrix with reinforcing fibres (12) and/or organic or mineral particles (13).

3. The insert for filling the dental canal according to claim 2, **characterized in that** the organisation of the fibres (12) of the core (10) is unidirectional, pluridirectional, or random, or all three at the same time.

4. The insert for filling the dental canal according to claim 1 or 2, **characterized in that** the core (10) is arranged as a light guiding duct, enabling the passage of electromagnetic or light radiation.

5. The insert for filling the dental canal according to claim 1 or 2, **characterized in that** the core (10) can be formed by a single filament.

6. The insert for filling the dental canal according to claim 1 or 2, **characterized in that** the core (10) is hollow (19) and comprises an internal duct (19) for injection of a glue-based sealing agent (7).

7. The insert for filling the dental canal according to claim 6, **characterized in that** the wall of the core (10) is porous (20) to allow passage of the glue (7), introduced under controlled pressure via the duct (19).

8. The insert for filling the dental canal according to claim 1 or 2, **characterized in that** the paste constituting the sleeve or sleeves (14) comprises an organic matrix reinforced by fibres (12), or by organic or mineral particles (13), of the same nature and structure as those of the core (10).

9. The insert for filling the dental canal according to claim 8, **characterized in that** the external sleeve (15) is formed by a sheath made of composite material of the same type as the internal sleeve or sleeves (14), said sheath being malleable and acting as container for all the materials of the core (10) and of the sleeves (14).

10. The insert for filling the dental canal according to claim 2 or 8, **characterized in that** the fibres (12) of the core (10) and of the sleeves (14) are organised according to unidirectional orientations, and that the volume of the sleeves (14) and of the external sheath (15) is modifiable by simple pressure.

11. The insert for filling the dental canal according to claim 9 or 10, **characterized in that** the woven external sheath (15) is a light channel enabling a light ray to pass.

12. The insert for filling the dental canal according to claim 9, **characterized in that** the assembly constituting the insert can be soldered or sealed at one end (18) in such a way that the material does not come unbound when its insertion in the root canal takes place.

13. The insert for filling the dental canal according to claim 12, **characterized in that** the soldered end part (18) of the insert can be rounded (21) to facilitate said insertion, regardless of the curvature or shape of the root canal (1).

14. The insert for filling the dental canal according to claim 9, **characterized in that** the structure of the fibres of the external sheath (15) is arranged to allow the excess resin to pass by extrusion as insertion of the insert in the canal (1) takes place, and that the extrusion of said excess resin mixes with the sealing agent glue (7) to seal the small dentinary canals (16) of the root (6).

15. The insert for filling the dental canal according to one of the claims 1 to 14, **characterized in that** the extended emerging part (17) of the insert can act as prop or pivot for a coronal reconstitution (3).

16. The insert for filling the dental canal according to one of the claims 1 to 15, **characterized in that** the insert is a manufactured product stored away from electromagnetic radiation in a sealed sachet at a temperature of less than 37°C.

17. The insert for filling the dental canal according to any one of the claims 1 to 16, **characterized in that** polymerisation by the action of the cross-linking means can be performed either by electromagnetic radiation, or by light rays, or by thermal effect.

18. The insert for filling the dental canal according to claim 17, **characterized in that** mass polymerisation of the insert (8) and of the sealing agent glue (7) is performed at the same time.
